# FASCICULE DE BREVET EUROPEEN

(11) **EP 1 355 398 B1**
(45) Date de publication et mention de la délivrance du brevet: **07.09.2005**
(21) Numéro de dépôt: 03290947.5
(22) Date de dépôt: 16.04.2003
(51) Int. Cl.: H02G 3/10, H01R 25/16, H01R 4/24

(54) **Système électrique à connexion rapide**
Elektrisches System mit schneller Verbindung
Electrical system with fast connection

(30) Priorité: 16.04.2002 FR 0204728
(43) Date de publication de la demande: 22.10.2003
(73) Titulaire: ARNOULD Fabrique d'Appareillage Electrique, 38160 Saint-Marcellin (FR)
(72) Inventeur: Morisot, Louis, 38160 Chatte (FR); Revol, Didier, 38160 Chatte (FR)
(74) Mandataire: Santarelli

(56) Documents cités:
- WO-A-01/56127
- DE-A- 2 315 187
- FR-A- 2 771 861
- US-A- 3 721 762

## Description

La présente invention concerne un système électrique comportant, d'une part, un appareillage électrique à rapporter en saillie sur une paroi support le long d'une goulotte de cheminement de conducteurs électriques, et, d'autre part, un connecteur électrique pour le raccordement électrique d'au moins un conducteur électrique audit appareillage électrique.

Généralement, dans un tel système électrique, ledit appareillage électrique comprend une partie avant fonctionnelle et une partie arrière, à fixer sur ladite paroi, comprenant une ouverture latérale pour le raccordement de ladite partie arrière à l'espace intérieur du socle de ladite goulotte.

Un tel système d'appareillage électrique est généralement utilisé dans le cas d'une rénovation d'habitat.

En effet, dans ce cas il est accouplé à différents types de goulottes (moulure ou plinthe) qui véhiculent des câbles ou conducteurs électriques, ce qui permet d'éviter de réaliser, dans les parois, des saignées pour des tubes pour conducteurs électriques et d'encastrer des boîtes pour appareillages électriques.

Toutefois, dans les systèmes électriques du type précité déjà connus, il est fréquent que certaines des bornes de connexion électrique du mécanisme d'appareillage électrique soient positionnées sur le dessus dudit mécanisme, ce qui oblige l'installateur à prévoir une longueur maximum de conducteurs électriques pour atteindre une telle borne. Cela n'est pas toujours aisé lorsqu'on rajoute un tel appareillage électrique sur un circuit déjà existant.

Le document WO 01/56127 A décrit un système électrique selon le préambule de la revendication 1.

L'invention permet de pallier aux inconvénients précités et de répondre aux attentes des installateurs en terme de rapidité et de facilité d'installation, grâce à un principe astucieux d'appareillage et de connecteur autodénudant.

Plus particulièrement, l'invention propose un système électrique, tel que défini en introduction, caractérisé en ce que ladite partie arrière de l'appareillage électrique loge des lames métalliques de connexion électrique qui s'étendent perpendiculairement à l'axe longitudinal de ladite goulotte en direction de ladite ouverture latérale, et en ce que ledit connecteur électrique comprend une cassette isolante à rapporter dans ladite ouverture latérale de la partie arrière de l'appareillage électrique, au-dessus du socle de ladite goulotte, cette cassette isolante logeant au moins une lame de connexion comportant une paire de contacts métalliques autodénudants pour le raccordement d'un conducteur électrique circulant dans ladite goulotte, et au moins un contact métallique destiné à venir en prise avec une des lames métalliques de connexion électrique dudit appareillage électrique.

D'autres caractéristiques avantageuses et non limitatives du système électrique conforme à l'invention sont les suivantes :
- chaque lame de connexion, logée dans ladite cassette isolante, est agencée de sorte que la paire de contacts métalliques autodénudants et ledit contact métallique s'étendent selon deux directions perpendiculaires ;
- ladite paire de contacts métalliques autodénudants est décalée latéralement par rapport audit contact métallique ;
- ladite paire de contacts métalliques autodénudants et ledit contact métallique sont alignés ;
- chaque lame de connexion, logée dans ladite cassette isolante, comprend une paire de contacts métalliques formant une pince destinée à être enfichée sur une des lames métalliques de connexion électrique dudit appareillage électrique ;
- la cassette isolante comporte une base présentant, sur sa face interne, des moyens de positionnement et de retenue des conducteurs électriques, et un couvercle portant, sur sa face interne, des moyens de positionnement et de retenue de lames de connexion, lesdites lames de connexion et lesdits conducteurs électriques présentant des positions relatives telles que le montage du couvercle sur la base entraîne le positionnement des paires de contacts métalliques autodénudants desdites lames de connexion sur lesdits conducteurs électriques ;
- lesdits moyens de positionnement et de retenue des conducteurs électriques comprennent des clips faisant saillie de la face interne de la base ;
- le couvercle présente, sur sa face externe, des zones de pression situées au droit des paires de contacts métalliques autodénudants positionnées sur la face interne dudit couvercle, ces zones de pression indiquant à l'installateur l'endroit où il doit réaliser une pression pour provoquer l'enfichage desdites paires de contacts métalliques autodénudants sur lesdits conducteurs électriques ;
- la base présente, sur sa face interne, une pluralité de logements distincts, chaque logement accueillant un conducteur électrique, et le couvercle comporte une pluralité de parties distinctes destinées à fermer lesdits logements distincts de ladite base, chaque partie du couvercle portant sur sa face interne des moyens de positionnement et de retenue des lames de connexion ;
- les parties distinctes du couvercle sont reliées entre elles par des languettes souples ;
- la base et le couvercle sont formés d'une seule pièce en matière plastique moulée et sont reliés l'un à l'autre par une partie souple formant charnière d'articulation ;
- la cassette isolante comporte à l'arrière des ouvertures d'accès aux contacts métalliques desdites lames de connexion que le système électrique contient ;
- le système électrique comporte des moyens de guidage et de centrage du connecteur électrique sur l'appareillage électrique ;
- lesdits moyens de guidage et de centrage comprennent, sur l'une des deux pièces que constituent la cassette isolante et l'appareillage électrique, au moins une nervure, et, sur l'autre pièce, au moins une rainure accueillant ladite nervure ;
- lesdits moyens de guidage et de centrage comprennent, sur l'une des deux pièces que constituent la cassette isolante et l'appareillage électrique, au moins une patte de centrage s'étendant selon la direction desdites lames métalliques de connexion électrique de l'appareillage électrique, et, sur l'autre pièce, au moins une ouverture accueillant ladite patte de centrage ;
- le système électrique comporte des moyens de verrouillage du connecteur électrique sur l'appareillage électrique ; et
- ces moyens de verrouillage sont des moyens d'encliquetage.

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue partielle en perspective d'un système électrique selon l'invention positionné le long d'une goulotte ;
- la figure 2 est une vue schématique en perspective du connecteur électrique selon l'invention, ouvert ;
- la figure 3 est une vue schématique en perspective avant du connecteur électrique de la figure 2, fermé ;
- la figure 4 est une vue schématique en perspective arrière du connecteur électrique de la figure 3 ;
- la figure 5 est une vue schématique en perspective de dessus du système électrique selon l'invention ;
- la figure 6 est une vue schématique en perspective des lames de connexion du connecteur électrique du système électrique selon l'invention ;
- la figure 7 est une vue schématique en perspective de la partie avant de l'appareillage électrique de la figure 1 ; et
- la figure 8 est une vue schématique en perspective d'une variante du connecteur électrique selon l'invention, ouvert.

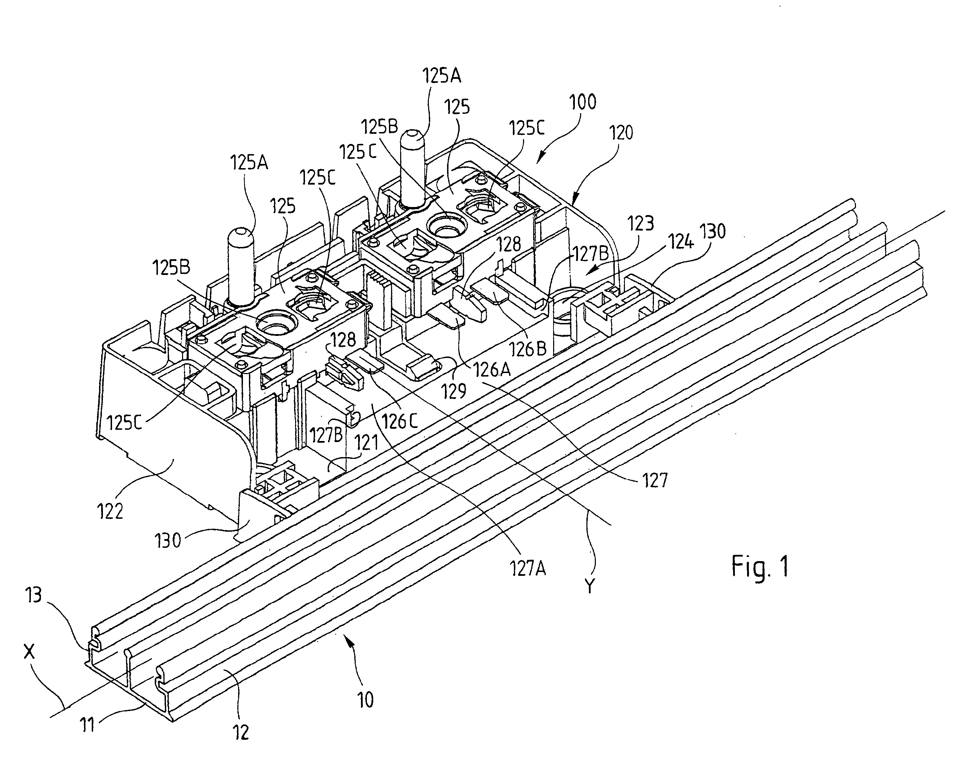

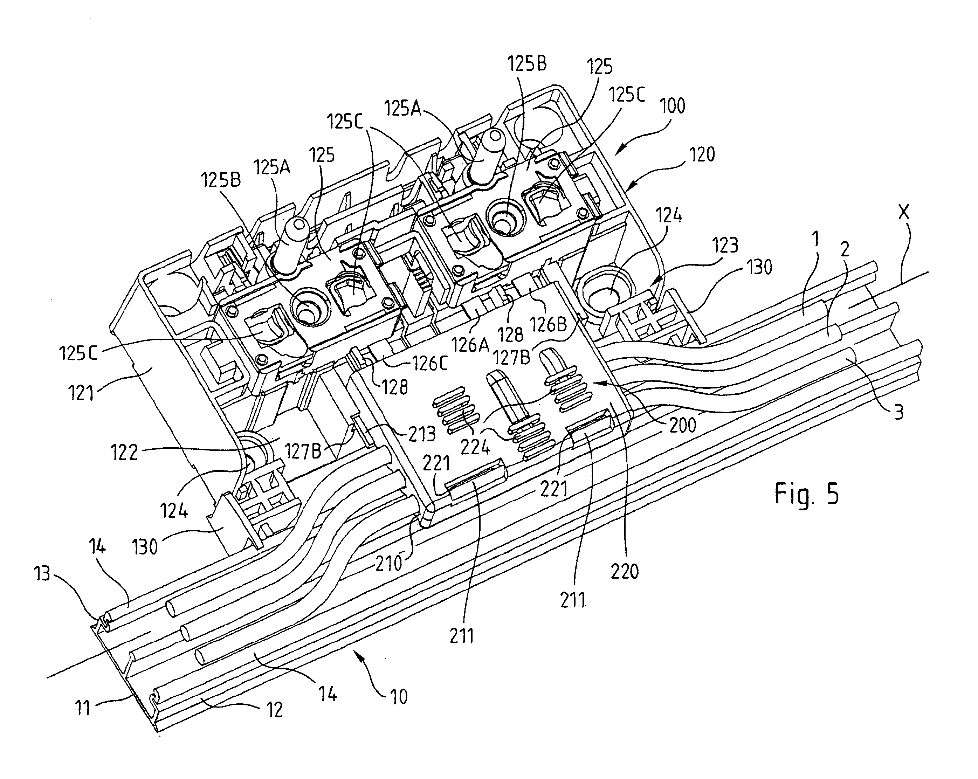

Sur les figures 1 et 5, on a représenté un système électrique qui comporte un appareillage électrique 100 à rapporter en saillie sur une paroi support le long d'une goulotte 10 de cheminement de conducteurs électriques.

Ici, l'appareillage électrique 100 est un socle d'une double prise de courant fort femelle à la norme française.

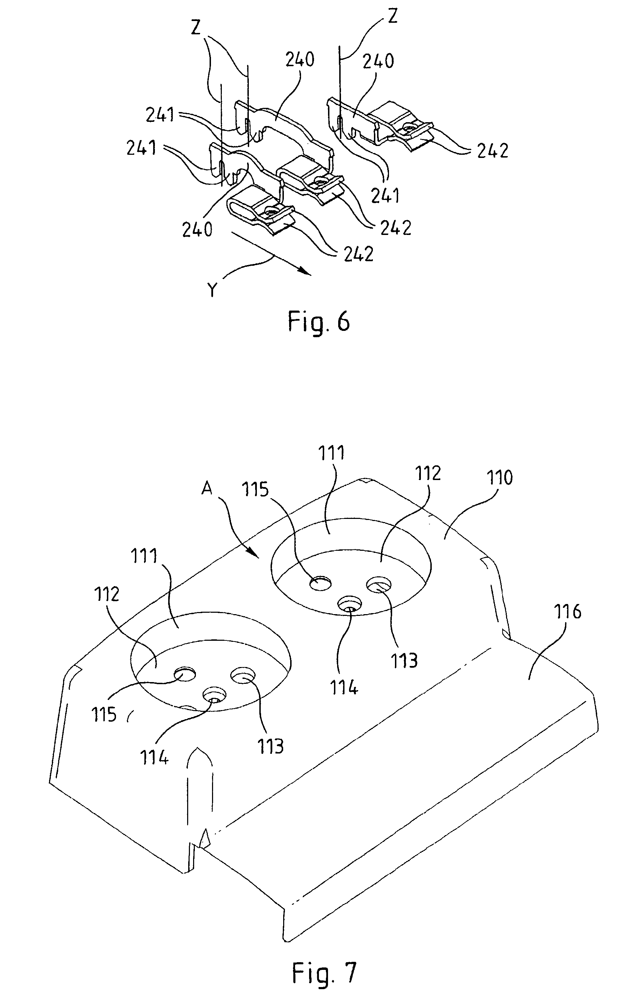

Cet appareillage électrique 100 comporte une partie avant 110 fonctionnelle, représentée plus particulièrement sur la figure 7, qui est un capot parallélépipédique rectangle dont la face avant A est pourvue de deux puits 111 identiques, chaque puits 111 étant destiné à accueillir une fiche de prise de courant (non représentée) et comportant, dans son fond 112, des ouvertures circulaires 113 dans lesquelles sont destinées à s'insérer les broches de connexion d'une telle fiche pour être raccordées électriquement au mécanisme d'appareillage correspondant.

Le fond 112 de chaque puits 111 de la partie avant 110 fonctionnelle de l'appareillage électrique 100 comporte, en outre, une ouverture centrale 114 dans laquelle est destinée à s'insérer une vis (non représentée) pour la fixation de la partie avant fonctionnelle à une partie arrière 120 de l'appareillage électrique 100.

Au surplus, le fond 112 de chaque puits 111 de la partie avant 110 fonctionnelle comporte une ouverture 115 permettant le passage d'une broche de raccordement à la terre 125A faisant saillie de la partie arrière 120 de l'appareillage électrique 100.

La partie avant 110 fonctionnelle comporte ici, sur un côté longitudinal, un auvent 116 destiné à venir recouvrir localement le socle 11 de la goulotte 10 le long de laquelle est rapporté l'appareillage électrique 100.

Ici, l'auvent 116 vient de formation avec le capot parallélépipédique, mais il peut être rapporté sur celui-ci.

La partie arrière 120 de l'appareillage électrique 100 comporte un boîtier isolant de forme parallélépipédique rectangle, globalement similaire à celle de la partie avant 110, pour constituer avec celle-ci un ensemble.

Cette partie arrière 120 est destinée à être fixée sur la paroi support le long du socle 11 de la goulotte 10.

A cet effet, le fond 121 du boîtier isolant comporte, à ses quatre coins, des ouvertures 124 de forme oblongue destinées à être traversées par des organes de fixation à ancrer dans la paroi support.

Le fond 121 du boîtier isolant de la partie arrière 120 de l'appareillage électrique 100 est bordé sur trois côtés par une paroi périphérique 122. Le quatrième côté, ici un côté longitudinal du boîtier isolant, est ouvert de sorte que cette partie arrière 120 comporte une ouverture latérale 123 pour le raccordement de celle-ci à l'espace intérieur du socle 11 de ladite goulotte 10.

Le boîtier isolant de la partie arrière 120 de l'appareillage électrique 100 renferme deux mécanismes de prise de courant 125 identiques et reliés électriquement entre eux par des barrettes électriques, appelées "shunts", non visibles sur les figures.

Les mécanismes de prise de courant 125 étant bien connus en eux-mêmes, ils ne seront pas décrits dans le détail.

Pour l'essentiel, ils contiennent chacun des bornes de raccordement électrique 125C, une borne de phase et une borne de neutre, dans lesquelles sont destinées à s'enficher les broches d'une fiche de prise de courant correspondante.

Ils comprennent également chacun une broche de raccordement à la terre 125A, et, entre les deux ouvertures d'accès aux bornes de raccordement électrique de phase et de neutre, une ouverture 125B pour la fixation de la partie avant 110 fonctionnelle de l'appareillage électrique 100 via une vis traversant l'ouverture centrale 114 prévue dans le fond de chaque puits 111.

Le boîtier isolant de la partie arrière 120 de l'appareillage électrique 100 loge des lames métalliques de connexion électrique 126A, 126B, 126C, qui sont issues des mécanismes de prise de courant 125, et qui s'étendent selon un axe Y perpendiculaire à l'axe longitudinal X de la goulotte 10 en direction de ladite ouverture latérale 123.

Plus particulièrement, les deux premières lames métalliques de connexion électrique 126A, 126B sont des lames de neutre et de terre. Elles sont issues d'un des deux mécanismes de prise de courant 125. La troisième lame métallique de connexion électrique 126C est une lame de phase et est issue de l'autre mécanisme de prise de courant 125.

Le système électrique représenté sur les figures comporte, en outre, un connecteur électrique 200 pour le raccordement électrique d'au moins un conducteur électrique 1, 2, 3 aux mécanismes de prise de courant 125 de l'appareillage électrique 100.

Ici, le connecteur électrique 200 permet le raccordement des trois lames métalliques de connexion électrique 126A, 126B, 126C issues des mécanismes de prise de courant 125 à trois conducteurs électriques 1, 2, 3 circulant dans le socle 11 de la goulotte 10.

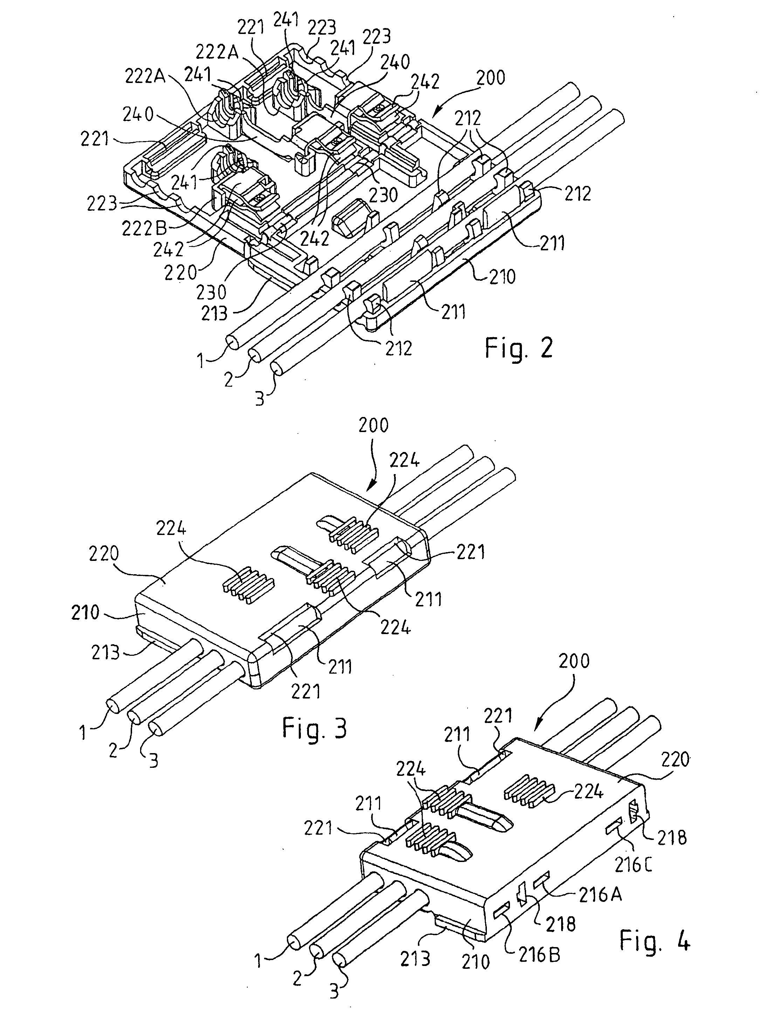

Ce connecteur électrique 200, plus particulièrement représenté sur les figures 2 à 4, comprend une cassette isolante 210, 220 à rapporter dans ladite ouverture latérale 123 de la partie arrière 120 de l'appareillage électrique 100 (voir figure 5), au-dessus du socle 11 de la goulotte 10.

A cet effet, il est prévu, sur le fond 121 du boîtier isolant de la partie arrière 120 de l'appareillage électrique 100, un socle 127 dont la surface supérieure 127A reçoit la cassette isolante 210, 220 de sorte qu'elle se trouve positionnée dans ladite ouverture latérale 123, juste au-dessus des retours 14 des ailes latérales 12, 13 du socle 11 de la goulotte 10.

Les lames métalliques de connexion électrique 126A, 126B, 126C, issues des mécanismes de prise de courant 125 logés dans le boîtier isolant de la partie arrière 120 de l'appareillage électrique 100, s'étendent, selon la direction Y, juste au-dessus de la surface supérieure 127A du socle 127 prévu sur le fond 121 du boîtier isolant.

Avantageusement, cette cassette isolante 210, 220 loge ici trois lames de connexion 240 (voir figure 6), chaque lame de connexion 240 comportant une paire de contacts métalliques autodénudants 241 pour le raccordement d'un conducteur électrique 1, 2, 3 circulant dans le socle 11 de ladite goulotte 10, et au moins un contact métallique 242 destiné à venir en prise avec une des lames métalliques de connexion électrique 126A, 126B, 126C de l'appareillage électrique 100.

Avantageusement, et comme le montre plus particulièrement la figure 6, chaque lame de connexion 240, logée dans ladite cassette isolante 210, 220, est agencée de sorte que la paire de contacts métalliques autodénudants 241 et ledit contact métallique 242 s'étendent selon deux directions Z, Y perpendiculaires.

Ici, chaque lame de connexion 240 comprend une paire de contacts métalliques 242 formant une pince allongée selon la direction Y, direction selon laquelle s'étendent les lames métalliques de connexion électrique de l'appareillage électrique 100, cette pince étant destinée à être enfichée sur une desdites lames métalliques de connexion électrique 126A, 126B, 126C dudit appareillage électrique 100.

Ici, pour chaque lame de connexion 240 logée dans ladite cassette isolante 210, 220, la paire de contacts métalliques autodénudants 241 est décalée latéralement par rapport à la paire de contacts métalliques 242 formant la pince.

Bien entendu, selon une variante non représentée, on pourrait prévoir que la paire de contacts métalliques autodénudants et la paire de contacts métalliques de chaque lame de connexion soient alignées.

En outre, comme le montrent les figures 2 à 4, la cassette isolante comporte une base 210 et un couvercle 220 articulé sur cette base.

Selon le mode de réalisation préférentiel représenté sur les figures, la base 210 et le couvercle 220 sont formés d'une seule pièce en matière plastique moulée et sont reliés l'un à l'autre par des parties souples formant charnières d'articulation 230.

La base 210 de la cassette isolante porte en saillie, sur sa face interne, des clips 212 disposés selon trois rangées. Ces clips 212 forment des moyens de positionnement et de retenue des conducteurs électriques 1, 2, 3 destinés à être reliés via les lames de connexion 240 et aux lames métalliques de connexion électrique 126A, 126B, 126C issues des mécanismes de prise de courant 125 de l'appareillage électrique 100.

La face interne du couvercle 220 porte des moyens de positionnement et de retenue des lames de connexion 240 logées dans ladite cassette isolante du connecteur électrique 200.

Ces moyens de positionnement et de retenue comprennent des parois 222A, 222B faisant saillie de la face interne du couvercle 220 et définissant entre elles des logements pour, d'une part, les paires de contacts métalliques autodénudants 241, et, d'autre part, les contacts métalliques 242 en forme de pince desdites lames de connexion 240.

Bien entendu, ces agencements, formant moyens de positionnement et de retenue, viennent de formation respectivement avec la base 210 et le couvercle 220 de la cassette isolante.

Comme le montre plus particulièrement la figure 2, les lames de connexion 240 et les conducteurs électriques 1, 2, 3 sont positionnés et retenus respectivement sur le couvercle 220 et sur la base 210 de sorte qu'ils présentent alors des positions relatives telles que le montage du couvercle 220 sur la base 210 de la cassette isolante entraîne le positionnement des paires de contacts métalliques autodénudants 241 sur lesdits conducteurs électriques 1, 2, 3.

Comme le montrent plus particulièrement les figures 3 et 4, avantageusement, le couvercle 220 de la cassette isolante comporte, sur sa face externe, des zones de pression 224 situées au droit des paires de contacts métalliques autodénudants 241 positionnées sur la face interne dudit couvercle 220.

Ces zones de pression 224 sont ici des zones hachurées ou crantées indiquant à l'installateur, après fermeture du couvercle 220 sur la base 210 de la cassette isolante, l'endroit où il doit réaliser une pression à l'aide d'un outil, tel qu'une pince, pour provoquer l'enfichage desdites paires de contacts métalliques autodénudants 241 positionnées sur lesdits conducteurs électriques 1, 2, 3.

Le couvercle 220 est relativement souple pour pouvoir se déformer élastiquement lors du pincement des zones de pression 224.

Par ailleurs, la base 210 de la cassette isolante porte, à proximité d'un de ses bords, deux dents d'encliquetage 211 destinées à venir s'encliqueter dans des ouvertures 221 prévues en correspondance sur le couvercle 220. Ainsi, on verrouille par encliquetage le couvercle 220 sur la base 210 de la cassette isolante.

Sur les bords latéraux de la base 210 et du couvercle 220 de la cassette isolante, il est prévu des échancrures 223 qui, par complémentarité de forme lors de la fermeture du couvercle 220 sur la base 210, forment des orifices de passage des conducteurs électriques 1, 2, 3 (voir figure 3).

Comme le montre plus particulièrement la figure 4, à l'arrière de la cassette isolante, il est prévu des ouvertures 216A, 216B, 216C débouchant chacune à l'entrée d'une pince de contacts métalliques 242 d'une lame de connexion 240 logée dans la cassette isolante.

Chaque lame métallique de connexion électrique 126A, 126B, 126C de l'appareillage électrique 100 est destinée à s'engager au travers d'une de ces ouvertures 216A, 216B, 216C pour son raccordement à une lame de connexion 240 du connecteur électrique 200, cette lame de connexion 240 étant elle-même raccordée à un conducteur électrique 1, 2, 3 passant au travers de la cassette isolante.

Ces ouvertures 216A, 216B, 216C, prévues à l'arrière de la cassette isolante sont, soit formées entièrement dans un rebord de la base 210, soit formées par complémentarité de forme entre la base 210 et le couvercle 220.

Avantageusement, le système électrique, représenté sur les figures, comporte des moyens de guidage et de centrage du connecteur électrique 200 sur l'appareillage électrique 100.

Ici, ces moyens de guidage et de centrage comprennent, sur deux côtés latéraux opposés de la cassette isolante, deux nervures 213, et, sur les bords latéraux opposés de la surface supérieure 127A du socle 127 porté par le fond du boîtier isolant de la partie arrière 120 de l'appareillage électrique 100, deux rainures 127B parallèles destinées à accueillir les deux nervures 213 de la cassette isolante positionnée sur la surface supérieure 127A dudit socle 127.

En outre, ces moyens de guidage et de centrage comprennent, selon le mode de réalisation préférentiel représenté, deux pattes de centrage 128 en matériau isolant s'étendant à partir des boîtiers des mécanismes de prise de courant 125 de l'appareillage électrique 100 selon la direction Y, en direction de ladite ouverture latérale 123.

En correspondance, il est prévu, à l'arrière de la cassette isolante formant le connecteur électrique 200, des ouvertures 218 accueillant lesdites pattes de centrage 128 lors du positionnement de la cassette isolante sur le socle 127.

Au surplus, le système électrique comporte des moyens de verrouillage du connecteur électrique 200 sur l'appareillage électrique 100.

Ici, ces moyens de verrouillage sont des moyens d'encliquetage. Ces dits moyens d'encliquetage comprennent une dent d'encliquetage 129 prévue en saillie sur la surface supérieure 127A du socle 127 de l'appareillage électrique 100 et une encoche (non représentée) prévue en correspondance sur la face externe de la base 210 de ladite cassette isolante.

Avantageusement, comme le montrent les figures 1 et 5, le boîtier isolant de la partie arrière 120 de l'appareillage électrique 100 comporte, sur ses deux côtés latéraux parallèles, des adaptateurs 130 s'étendant au-delà de l'ouverture latérale 123 et aptes à se positionner contre une aile latérale 13 du socle 11 de la goulotte 10 pour adapter ledit appareillage électrique 100 à deux largeurs différentes de socle de goulotte, une petite largeur telle que représentée sur la figure 1, et une plus grande largeur non représentée.

Pour l'adaptation de l'appareillage électrique 100 représenté à une plus grande largeur de goulotte, il suffit de détacher les adaptateurs 130 de la paroi périphérique 122 du boîtier isolant par découpage de parties sécables.

Ainsi, avec un même boîtier isolant et une même partie avant 110 fonctionnelle, on peut adapter l'appareillage électrique 100 à deux largeurs différentes de goulotte.

Grâce au système électrique représenté sur les figures, l'installateur peut facilement raccorder électriquement le ou les mécanismes d'appareillage électrique de l'appareillage électrique 100 aux conducteurs électriques circulant dans un socle de goulotte.

Tout d'abord, il positionne, sur la face interne de la base 210 de la cassette isolante constituant le connecteur électrique 200, les conducteurs 1, 2, 3 en les coinçant entre les clips 212.

Puis, il referme sur la base 210 le couvercle 220 portant sur sa face interne les lames de connexion 240, en le verrouillant par encliquetage dans les ouvertures 221 de ladite base 210.

Dans cette position, les paires de contacts métalliques autodénudants 241 des lames de connexion 240 sont positionnées sur les conducteurs électriques 1, 2, 3.

Puis, en exerçant une pression, au moyen d'une pince par exemple, sur les zones de pression 224, ici des zones hachurées, il provoque l'enfichage des paires de contacts métalliques autodénudants 241 sur les conducteurs électriques 1, 2, 3 de façon à raccorder électriquement ces derniers aux lames de connexion 240.

L'installateur peut alors glisser la cassette isolante dans les rainures 127B bordant la surface supérieure 127A du socle 127 de l'appareillage électrique 100 de façon à engager les lames métalliques de connexion électrique 126A, 126B, 126C de l'appareillage électrique 100 au travers des ouvertures 216A, 216B, 216C du connecteur électrique 200 et à les enficher dans les pinces 242 des lames de connexion 240 dudit connecteur électrique 200. Lors de cette action, le connecteur électrique 200 est guidé sur le socle 127 par glissement des nervures 213 dans les rainures 127B.

En bout de course, les pattes de centrage 128, s'engageant dans les ouvertures 218 correspondantes prévues à l'arrière du connecteur électrique, provoquent un centrage de ce dernier par rapport à l'appareillage électrique.

L'enfichage des lames métalliques de connexion électriques 126A, 126B, 126C dans les pinces 242 des lames de connexion 240 du connecteur électrique 200 s'effectue alors correctement.

En bout de course également, la dent d'encliquetage 129 de l'appareillage électrique 100 s'encliquette dans l'encoche correspondante de la cassette isolante de façon à verrouiller le connecteur électrique 200 sur l'appareillage électrique 100. Cet encliquetage provoque un signal sonore qui assure à l'installateur que le verrouillage est bien réalisé.

Dans cette position, telle que représentée sur la figure 5, les conducteurs électriques 1, 2, 3 circulant dans le socle 11 de la goulotte 10 sont très peu déviés par rapport à leur trajet initial.

Il ne reste plus à l'installateur qu'à fermer la partie arrière 120 de l'appareillage électrique 100 avec la partie avant 110 fonctionnelle qui recouvre le connecteur électrique 200 et la partie correspondante du socle 11 de la goulotte 10.

La connexion électrique d'un tel système électrique aux conducteurs électriques du réseau est extrêmement simple, rapide et nécessite peu d'outil.

La présente invention n'est nullement limitée au mode de réalisation décrit et représenté, mais l'homme du métier saura y apporter toute variante conforme à son esprit.

En particulier, l'appareillage électrique du système électrique représenté pourrait être par exemple une simple prise de courant ou tout autre type d'appareillage électrique.

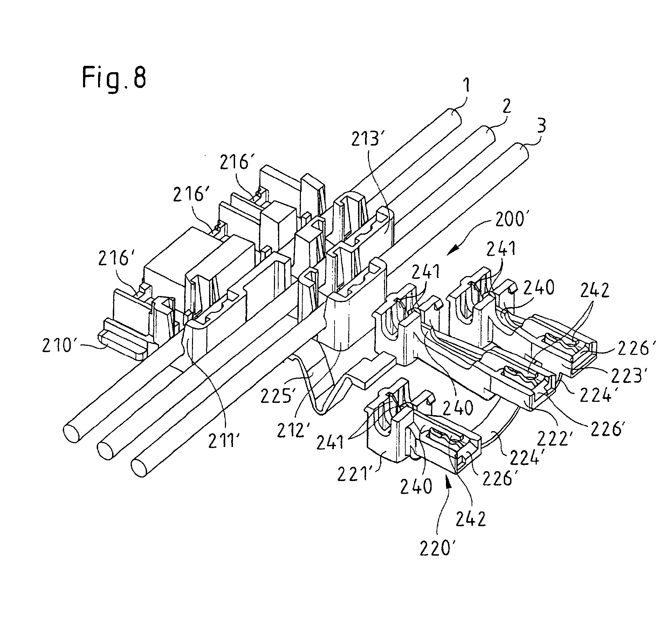

En outre, on peut prévoir, selon une variante de réalisation de l'invention représentée sur la figure 8, que le connecteur électrique 200' comprend une cassette isolante 210', 220' à rapporter également dans une ouverture latérale de la partie arrière d'un appareillage électrique, au-dessus du socle de la goulotte. Cette cassette isolante 210', 220' loge également trois lames de connexion 240 qui comprennent chacune une paire de contacts métalliques autodénudants 241 pour le raccordement d'un conducteur électrique 1, 2, 3 circulant dans le socle de la goulotte et au moins un contact métallique 242 destiné à venir en prise avec une des lames métalliques de connexion électrique de l'appareillage électrique concerné.

Tout comme les lames de connexion 240 représentées sur la figure 6, celles représentées sur la figure 8 sont agencées de sorte que la paire de contacts métalliques autodénudants 241 et le contact métallique 242 s'étendent dans deux directions perpendiculaires.

Chaque lame de connexion 240 comprend également une paire de contacts métalliques 242 formant une pince allongée selon la direction selon laquelle s'étendent les lames métalliques de connexion électrique de l'appareillage électrique concerné, cette pince étant destinée à être enfichée sur une desdites lames métalliques de connexion électrique dudit appareillage électrique.

Comme le montre la figure 8, selon cette variante de réalisation, la cassette isolante comporte une base 210' et un couvercle 220' articulé sur cette base par l'intermédiaire d'une languette souple 225' formant charnière d'articulation.

La base 210' et le couvercle 220' sont formés d'une seule pièce en matière plastique moulée et sont reliés l'un à l'autre par ladite languette souple 225'.

Ici, la base 210' de la cassette isolante présente, sur sa face interne, une pluralité de logements 211', 212', 213' distincts, disposés en quinconce, chaque logement 211', 212', 213' accueillant un conducteur électrique 1, 3, 2 de telle manière que chacun de ces conducteurs électriques est retenu dans le logement correspondant de la base 210'. Le couvercle 220' comporte une pluralité de parties 221', 222', 223' distinctes destinées à fermer chacun desdits logements 211', 212', 213' distincts de la base 210'. Chaque partie 221', 222', 223' du couvercle 220' porte, sur sa face interne, des moyens de positionnement et de retenue d'une lame de connexion 240. Les parties 221', 222', 223' distinctes du couvercle 220' sont reliées entre elles par des languettes 224' souples de sorte que la fermeture de chaque logement de la base 210' par chaque partie du couvercle 220' se fait de manière indépendante de la fermeture des autres logements de ladite base.

En outre, on remarquera que chacune des parties 221', 222', 223' distinctes du couvercle 220' comporte une dent 226' d'accrochage sur une dent complémentaire 216' prévue sur la face interne de la base 210'.

Avantageusement, cette variante du connecteur électrique selon l'invention permet à l'installateur d'éviter, lors de la connexion d'une paire de contacts métalliques autodénudants 241 d'une lame de connexion 240 sur un conducteur électrique 1, 2, 3 logé dans un des logements 211', 212', 213' de la base 210', de provoquer la déconnexion des autres paires de contacts métalliques autodénduants 241 des autres conducteurs électriques 1, 2, 3. En fait, selon cette variante, chaque connexion électrique est individualisée au sein de la cassette isolante 210', 220' elle-même.

## Revendications

1. Système électrique comportant, d'une part, un appareillage électrique (100) à rapporter en saillie sur une paroi support le long d'une goulotte (10) de cheminement de conducteurs électriques, ledit appareillage électrique (100) comprenant une partie avant (110) fonctionnelle et une partie arrière (120), à fixer sur ladite paroi support, comprenant une ouverture latérale (123) pour le raccordement de ladite partie arrière (120) à l'espace intérieur du socle (11) de ladite goulotte (10), et, d'autre part, un connecteur électrique (200) pour le raccordement électrique d'au moins un conducteur électrique (1, 2, 3) audit appareillage électrique (100), **caractérisé en ce que** ladite partie arrière (120) de l'appareillage électrique (100) loge des lames métalliques de connexion électrique (126A, 126B, 126C) qui s'étendent perpendiculairement à l'axe longitudinal (X) de ladite goulotte (10) en direction de ladite ouverture latérale (123), et **en ce que** ledit connecteur électrique (200) comprend une cassette isolante (210, 220) à rapporter dans ladite ouverture latérale (123) de la partie arrière (120) de l'appareillage électrique (100), au-dessus du socle (11) de ladite goulotte (10), cette cassette isolante (210, 220) logeant au moins une lame de connexion (240) comportant une paire de contacts métalliques autodénudants (241) pour le raccordement d'un conducteur électrique (1, 2, 3) circulant dans ladite goulotte (10), et au moins un contact métallique (242) destiné à venir en prise avec une des lames métalliques de connexion électrique (126A, 126B, 126C) dudit appareillage électrique (100).

2. Système électrique selon la revendication 1, **caractérisé en ce que** chaque lame de connexion (240), logée dans ladite cassette isolante (210, 220), est agencée de sorte que la paire de contacts métalliques autodénudants (241) et ledit contact métallique (242) s'étendent selon deux directions (Z, Y) perpendiculaires.

3. Système électrique selon la revendication 2, **caractérisé en ce que** ladite paire de contacts métalliques autodénudants (241) est décalée latéralement par rapport audit contact métallique (242).

4. Système électrique selon la revendication 2, **caractérisé en ce que** ladite paire de contacts métalliques autodénudants (241) et ledit contact métallique (242) sont alignés.

5. Système électrique selon l'une des revendications 1 à 4, **caractérisé en ce que** chaque lame de connexion (240), logée dans ladite cassette isolante (210, 220), comprend une paire de contacts métalliques (242) formant une pince destinée à être enfichée sur une des lames métalliques de connexion électrique (126A, 126B, 126C) dudit appareillage électrique (100).

6. Système électrique selon l'une des revendications 1 à 5, **caractérisé en ce que** la cassette isolante comporte une base (210) présentant, sur sa face interne, des moyens de positionnement et de retenue (212) des conducteurs électriques, et un couvercle (220) portant, sur sa face interne, des moyens de positionnement et de retenue (222A, 222B) de lames de connexion (240), lesdites lames de connexion (240) et lesdits conducteurs électriques (1, 2, 3) présentant des positions relatives telles que le montage du couvercle (220) sur la base (210) entraîne le positionnement des paires de contacts métalliques autodénudants (241) desdites lames de connexion sur lesdits conducteurs électriques (1, 2, 3).

7. Système électrique selon la revendication 6, **caractérisé en ce que** lesdits moyens de positionnement et de retenue (212) des conducteurs électriques (1, 2, 3) comprennent des clips faisant saillie de la face interne de la base (210).

8. Système électrique selon l'une des revendications 6 ou 7, **caractérisé en ce que** le couvercle (220) présente, sur sa face externe, des zones de pression (224) situées au droit des paires de contacts métalliques autodénudants (241) positionnées sur la face interne dudit couvercle (220), ces zones de pression (224) indiquant à l'installateur l'endroit où il doit réaliser une pression pour provoquer l'enfichage desdites paires de contacts métalliques autodénudants (241) sur lesdits conducteurs électriques (1, 2, 3).

9. Système électrique selon la revendication 6, **caractérisé en ce que** la base (210') présente, sur sa face interne, une pluralité de logements (211', 212', 213') distincts, chaque logement (211', 212', 213') accueillant un conducteur électrique (1, 2, 3), et **en ce que** le couvercle (220') comporte une pluralité de parties (221', 222', 223') distinctes destinées à fermer lesdits logements (211', 212', 213') distincts de ladite base (220'), chaque partie (221', 222', 223') du couvercle (220') portant sur sa face interne des moyens de positionnement et de retenue des lames de connexion (240).

10. Système électrique selon la revendication 9, **caractérisé en ce que** les parties (221', 222', 223') distinctes du couvercle (220') sont reliées entre elles par des languettes (224') souples.

11. Système électrique selon l'une des revendications 6 à 10, **caractérisé en ce que** la base (210 ; 210') et le couvercle (220 ; 220') sont formés d'une seule pièce en matière plastique moulée et sont reliés l'un à l'autre par une partie souple formant charnière d'articulation (230 ; 225').

12. Système électrique selon l'une des revendications 6 à 11, **caractérisé en ce que** la cassette isolante (210, 220) comporte à l'arrière des ouvertures (216A, 216B, 216C) d'accès aux contacts métalliques (242) desdites lames de connexion (240) qu'il contient.

13. Système électrique selon l'une des revendications 1 à 12, **caractérisé en ce qu'**il comporte des moyens de guidage et de centrage du connecteur électrique (200) sur l'appareillage électrique (100).

14. Système électrique selon la revendication 13, **caractérisé en ce que** lesdits moyens de guidage et de centrage comprennent, sur l'une des deux pièces que constituent la cassette isolante (210, 220) et l'appareillage électrique (100), au moins une nervure (213), et, sur l'autre pièce, au moins une rainure (127B) accueillant ladite nervure (213).

15. Système électrique selon l'une des revendications 13 ou 14, **caractérisé en ce que** lesdits moyens de guidage et de centrage comprennent, sur l'une des deux pièces que constituent la cassette isolante (210, 220) et l'appareillage électrique (100), au moins une patte de centrage (128) s'étendant selon la direction desdites lames métalliques de connexion électrique (126A, 126B, 126C) de l'appareillage électrique, et, sur l'autre pièce, au moins une ouverture (218) accueillant ladite patte de centrage (128).

16. Système électrique selon l'une des revendications précédentes, **caractérisé en ce qu'**il comporte des moyens de verrouillage du connecteur électrique (200) sur l'appareillage électrique (100).

17. Système électrique selon la revendication 16, **caractérisé en ce que** ces moyens de verrouillage sont des moyens d'encliquetage (129).

## Patentansprüche

1. Elektrisches System, umfassend einerseits ein elektrisches Gerät (100), das auf einer Tragwand längs einer Rinne (10) zur Verlegung von elektrischen Leitern vorstehend anzubringen ist, wobei dieses elektrische Gerät (100) einen vorderen funktionellen Teil (110) und einen hinteren Teil (120) aufweist, der auf der Tragwand zu befestigen ist, umfassend eine seitliche Öffnung (123) für die Verbindung des hinteren Teils (120) mit dem Innenraum des Sockels (11) der Rinne (10), und andererseits einen elektrischen Verbinder (200) für den elektrischen Anschluss mindestens eines elektrischen Leiters (1, 2, 3) an das elektrische Gerät (100), **dadurch gekennzeichnet, dass** im hinteren Teil (120) des elektrischen Geräts (100) metallische Lamellen zur elektrischen Verbindung (126A, 126B, 126C) untergebracht sind, die sich senkrecht zur Längsachse (X) der Rinne (10) in Richtung der seitlichen Öffnung (123) erstrecken, und dass der elektrische Verbinder (200) eine isolierende Kassette (210, 220) umfasst, die in der seitlichen Öffnung (123) des hinteren Teils (120) des elektrischen Geräts (100) über dem Sockel (11) der Rinne (10) anzubringen ist, wobei in dieser isolierenden Kassette (210, 220) mindestens eine Verbindungslamelle untergebracht ist, die ein Paar von selbstabisolierenden metallischen Kontakten (241) für den Anschluss eines in der Rinne (10) verlaufenden elektrischen Leiters (1, 2, 3) und mindestens einen metallischen Kontakt (242) aufweist, der dazu bestimmt ist, mit einer der metallischen Lamellen zur elektrischen Verbindung (126A, 126B, 126C) des elektrischen Geräts (100) in Eingriff zu kommen.

2. Elektrisches System nach Anspruch 1, **dadurch gekennzeichnet, dass** jede Verbindungslamelle (240), die in der isolierenden Kassette (210, 220) untergebracht ist, so ausgebildet ist, dass das Paar von selbstabisolierenden metallischen Kontakten (241) und der metallische Kontakt (242) sich in zwei zueinander senkrechten Richtungen (Z, Y) erstrecken.

3. Elektrisches System nach Anspruch 2, **dadurch gekennzeichnet, dass** das Paar von selbstabisolierenden metallischen Kontakten (241) bezüglich des metallischen Kontakts (242)seitlich versetzt ist.

4. Elektrisches System nach Anspruch 2, **dadurch gekennzeichnet, dass** das Paar von selbstabisolierenden metallischen Kontakten (241) und der metallische Kontakt (242) in einer Linie angeordnet sind.

5. Elektrisches System nach einem der Ansprüche 1 bis 4,
**dadurch gekennzeichnet, dass** jede Verbindungslamelle (240), die in der isolierenden Kassette (210, 220) untergebracht ist, ein Paar von metallischen Kontakten (242) aufweist, die eine Klemme bilden, die dazu bestimmt ist, auf eine der metallischen Lamellen zur elektrischen Verbindung (126A, 126B, 126C) des elektrischen Geräts (100) gesteckt zu werden.

6. Elektrisches System nach einem der Ansprüche 1 bis 5, **dadurch gekennzeichnet, dass** die isolierende Kassette eine Basis (210) umfasst, die auf ihrer Innenseite Mittel zum Positionieren und zum Zurückhalten (212) der elektrischen Leiter umfasst, und einen Deckel (220), der auf seine Innenseite Mittel zum Positionieren und zum Zurückhalten (222A, 222B) von Verbindungslamellen (240) trägt, wobei die Verbindungslamellen (240) und die elektrischen Leiter (1, 2, 3) solche Stellungen zueinander besitzen, dass die Montage des Deckels (220) auf der Basis (210) die Positionierung der Paare von selbstabisolierenden metallischen Kontakten (241) der Verbindungslamellen auf den elektrischen Leitern (1, 2, 3) mit sich bringt.

7. Elektrisches System nach Anspruch 6, **dadurch gekennzeichnet, dass** die Mittel zum Positionieren und zum Zurückhalten (212) der elektrischen Leiter (1, 2, 3) Klips umfassen, die an der Innenseite der Basis (210) vorstehen.

8. Elektrisches System nach einem der Ansprüche 6 oder 7, **dadurch gekennzeichnet, dass** der Deckel (220) auf seiner Außenseite Druckzonen (224) besitzt, die auf Höhe der Paare von selbstabisolierenden metallischen Kontakten (241) gelegen sind, die auf der Innenseite des Deckels (220) positioniert sind, wobei diese Druckzonen (224) dem Installateur die Stelle angeben, an der er einen Druck ausüben muss, um das Aufstecken der Paare von selbstabisolierenden metallischen Kontakten (241) auf die elektrischen Leiter (1, 2, 3) zu bewirken.

9. Elektrisches System nach Anspruch 6, **dadurch gekennzeichnet, dass** die Basis (210') auf ihrer Innenseite eine Vielzahl von getrennten Aufnahmen (211', 212', 213') aufweist, wobei jede Aufnahme (211', 212', 213') einen elektrischen Leiter (1, 2, 3) aufnimmt, und dass der Deckel (220') eine Vielzahl von getrennten Teilen (221', 222', 223') aufweist, die dazu bestimmt sind, diese getrennten Aufnahmen (211', 212', 213') der Basis (220') zu schließen, wobei jeder Teil (221', 222', 223') des Deckels (220') auf seiner Innenseite Mittel zum Positionieren und zum Zurückhalten der Verbindungslamellen (240) trägt.

10. Elektrisches System nach Anspruch 9, **dadurch gekennzeichnet, dass** die getrennten Teile (221', 222', 223') des Deckels (220') miteinander durch biegsame Zungen (224') verbunden sind.

11. Elektrisches System nach einem der Ansprüche 6 bis 10,
**dadurch gekennzeichnet, dass** die Basis (210; 210') und der Deckel (220; 220') aus einem einzigen Stück aus geformtem Kunststoff gebildet sind und miteinander durch einen biegsamen Teil verbunden sind, der ein Gelenkscharnier (230; 225') bildet.

12. Elektrisches System nach einem der Ansprüche 6 bis 11, **dadurch gekennzeichnet, dass** die isolierende Kassette (210, 220) hinten Öffnungen (216A, 216B, 216C) für den Zugang zu den metallischen Kontakten (242) der Verbindungslamellen (240), die es enthält, aufweist.

13. Elektrisches System nach einem der Ansprüche 1 bis 12, **dadurch gekennzeichnet, dass** es Mittel zur Führung und zur Zentrierung des elektrischen Verbinders (200) auf dem elektrischen Gerät (100) aufweist.

14. Elektrisches System nach Anspruch 13, **dadurch gekennzeichnet, dass** die Führungs- und Zentrierungsmittel auf einem der beiden Teile, die die isolierende Kassette (210, 220) und das elektrische Gerät (100) bilden, mindestens eine Rippe (213) und auf dem anderen Teil mindestens eine diese Rippe (213) aufnehmende Nut (127B) umfassen.

15. Elektrisches System nach einem der Ansprüche 13 oder 14, **dadurch gekennzeichnet, dass** die Führungs- und Zentrierungsmittel auf einem der beiden Teile, die die isolierende Kassette (210, 220) und das elektrische Gerät (100) bilden, mindestens einen Zentrierlappen (128) umfassen, der sich in der Richtung der metallischen Lamellen zur elektrischen Verbindung (126A, 126B, 126C) erstreckt, wobei mindestens eine Öffnung (218) diesen Zentrierlappen (128) aufnimmt.

16. Elektrisches System nach einem der vorhergehenden Ansprüche, **dadurch gekennzeichnet, dass** es Mittel zur Verriegelung des elektrischen Verbinders (200) auf dem elektrischen Gerät (100) aufweist.

17. Elektrisches System nach Anspruch 16, **dadurch gekennzeichnet, dass** die Verriegelungsmittel Einrastmittel (129) sind.

## Claims

1. An electrical system comprising firstly, an electrical device (100) for mounting upon a support wall along a ducting (10) for guiding electrical conductors, said electrical device (100) comprising a functional front portion (110) and a rear portion (120) for fixing to said support wall, comprising a lateral opening (123) to connect said rear portion (120) to the inner space of the base (11) of said ducting (10), and secondly, an electrical connector (200) for electrical connection of at least one electrical conductor (1, 2, 3) to said electrical device (100), **characterized in that** said rear portion (120) of the electrical device (100) houses metallic electrical connection strips (126A, 126B, 126C) which extend perpendicular to the longitudinal axis (X) of said ducting (10) in the direction of said lateral opening (123), and **in that** said electrical connector (200) comprises an insulating cassette (210, 220) for mounting in said lateral opening (123) of the rear portion (120) of the electrical device (100) above the base (11) of said ducting (10), said insulating cassette (210, 220) housing at least one connection strip (240) comprising a pair of self-stripping metal contacts (241) for connection to an electrical conductor (1, 2, 3) laid in said ducting (10) and at least one metal contact (242) intended to tap into one of the metal electrical connection strips (126A, 126B, 126C) of said electrical device (100).

2. An electrical system according to claim 1, **characterized in that** each connection strip (240) housed in said insulating cassette (210, 220) is arranged so that the pair of self-stripping metal contacts (241) and said metal contact (242) extend along two perpendicular directions (Z, Y).

3. An electrical system according to claim 2, **characterized in that** said pair of self-stripping metal contacts (241) is laterally offset with respect to said metal contact (242).

4. An electrical system according to claim 2, **characterized in that** said pair of self-stripping metal contacts (241) and said metal contact (242) are aligned.

5. An electrical system according to one of claims 1 to 4, **characterized in that** each connection strip (240) housed in said insulating cassette (210, 220) comprises a pair of metal contacts (242) forming a clamp for locking onto one of the metal electrical connection strips (126A, 126B, 126C) of said electrical device (100).

6. An electrical system according to one of claims 1 to 5, **characterized in that** the insulating cassette comprises a base (210) having on its inner surface means (212) for positioning and retaining electrical conductors, and a cover (220) carrying, on its inner face, means (222A, 222B) for positioning and retaining connection strips (240), said connection strips (240) and said electrical conductors (1, 2, 3) having relative positions such that mounting the cover (220) on the base (210) causes positioning of the pairs of self-stripping metal contacts (241) of said connection strips on said electrical conductors (1, 2, 3).

7. An electrical system according to claim 6, **characterized in that** said means for positioning and retaining electrical conductors (1, 2, 3) comprises clips projecting from the inner face of the base.

8. An electrical system according to claim 6 or claim 7, **characterized in that** the outer face of the cover (220) has pressure zones (224) located in register with the pairs of self-stripping metal contacts (241) positioned on the inner face of said cover (220), said pressure zones (224) indicating to the installer the region where pressure must be applied to cause locking of said pairs of self-stripping metal contacts (241) onto said electrical conductors (1, 2, 3).

9. An electrical system according to claim 6, **characterized in that** the inner face of the base (210') has a plurality of distinct housings (211', 212', 213'),each housing (211', 212', 213') receiving an electrical conductor (1, 2, 3), and **in that** the cover (220') comprises a plurality of distinct portions (221', 222', 223') intended to close said distinct housings (211', 212', 213') of said base (220'), each portion (221', 222', 223') of the cover (220') carrying means for positioning and retaining connection strips (240) on its inner face.

10. An electrical system according to claim 9, **characterized in that** the distinct portions (221', 222', 223') of the cover (220') are connected together via flexible tabs (224').

11. An electrical system according to one of claims 6 to 10, **characterized in that** the base (210; 210') and the cover (220; 220') are formed from a single piece of moulded plastic material and are connected to each other via a flexible portion forming a hinge (230; 225').

12. An electrical system according to one of claims 6 to 11, **characterized in that** the rear of the insulating cassette (210, 220) comprises openings (216A, 216B, 216C) for access to the metal contacts (242) of said connection strips (240) contained therein.

13. An electrical system according to one of claims 1 to 12, **characterized in that** it comprises means for guiding and centering an electrical connector (200) on the electrical device (100).

14. An electrical system according to claim 13, **characterized in that** said centering and guiding means comprise, on one of the two parts constituting the insulating cassette (210, 220) and the electrical device (100), at least one rib (213) and on the other part, at least one groove (127B) receiving said rib (213).

15. An electrical system according to claim 13 or claim 14, **characterized in that** said guiding and centering means comprise, on one of the two pieces constituting the insulating cassette (210, 220) and the electrical device (100), at least one centering lug (128) extending along the direction of said electrical connection metal strips (126A, 126B, 126C) of the electrical device and, on the other piece, at least one opening (218) receiving said centering lug (128).

16. An electrical system according to one of the preceding claims, **characterized in that** it comprises means for locking the electrical connector (200) on the electrical device (100).

17. An electrical system according to claim 16, **characterized in that** said locking means are snap fitting means (129).
